# FASCICULE DE BREVET EUROPEEN

(11) **EP 0 967 429 B1**
(45) Date de publication et mention de la délivrance du brevet: **30.07.2003**
(21) Numéro de dépôt: 99401113.8
(22) Date de dépôt: 06.05.1999
(51) Int. Cl.: F16L 47/00

(54) **Dispositif de maintien d'une canalisation secondaire sur une prise de branchement et procédé utilisant ce dispositif pour relier une canalisation secondaire à une canalisation principale**
Aufnahmevorrichtung einer Zweigleitung auf einem Rohrabzweigungsstück und Verfahren zum Verbinden einer Zweigleitung an eine Hauptleitung mit Hilfe dieser Vorrichtung
Device for accomodating a branch pipe on a branch pipe fitting and method of connecting a branch pipe to a main using this device

(30) Priorité: 27.05.1998 FR 9806665
(43) Date de publication de la demande: 29.12.1999
(73) Titulaire: GAZ DE FRANCE, 75017 Paris (FR)
(72) Inventeur: Caraveo, Philipe, 89100 Saint-Clement (FR); Taillade, Michel, 75017 Paris (FR); Le Cointe, Patrick, 95570 Bouffemont (FR)
(74) Mandataire: Lerner, François

(56) Documents cités:
- EP-A- 0 536 427
- EP-A- 0 580 222

## Description

La présente invention a pour objet un dispositif de maintien en position d'une canalisation secondaire sur une prise de branchement destinée à être montée sur une canalisation principale enterrée de transport d'un fluide (gaz naturel par exemple), ainsi qu'un procédé de mise en place d'une canalisation secondaire sur une canalisation principale utilisant ce dispositif, et ce en particulier depuis le haut d'un puits de fouille.

Il est souvent nécessaire de poser des prises de branchement ou de dérivation sur des canalisations souterraines déjà existantes, telles que des canalisations de distribution de gaz ou d'eau, par exemple pour relier des usagers à un réseau de distribution.

Pour cela, on peut réaliser un puits de fouille de dimensions limitées (afin notamment de limiter la gêne causée à la circulation des piétons ou des véhicules) ne permettant pas à une personne de descendre au fond de celle-ci de telle sorte que les opérations de mise en place de la prise doivent être effectuées depuis le haut de la fouille (ou « hors fouille »).

Lorsque la canalisation et la prise de branchement sont réalisées en matière thermofusible, telle que du polyéthylène, la solidarisation de la prise de branchement sur la canalisation s'effectue le plus souvent par soudage. Le corps de la prise de branchement, généralement en forme de selle (supérieure et éventuellement inférieure), est alors équipé d'une résistance électrique connectée à deux plots d'alimentation de liaison à une source d'alimentation électrique pour effectuer l'opération de soudage par fusion de la semelle de la prise et son soudage sur la canalisation. On doit également introduire la canalisation secondaire (en général de diamètre nettement inférieur à la canalisation principale) à l'intérieur d'un manchon cylindrique dont est équipée la prise de branchement et qui est disposé latéralement par rapport à son fût, en général à angle droit avec la canalisation principale. Ce manchon est aussi muni de plots de connexion électrique pour le soudage de la canalisation secondaire sur la prise de branchement.

Pour réaliser un soudage correct entre la prise de branchement et la canalisation principale d'une part, et la canalisation secondaire et la prise de branchement d'autre part, on connaît déjà par exemple de EP 580 222 des appareils permettant de positionner et de maintenir en place la canalisation secondaire sur la canalisation principale. Ces appareils prennent appui à la fois sur la canalisation principale et sur la canalisation secondaire, le plus souvent à l'aides de bras réglables. Pour cela, ils utilisent généralement des mâchoires (ou mors) et/ou des pinces, le plus souvent à ouverture variable permettant de s'adapter à des diamètres de canalisations différents, que l'on place sur lesdites canalisations.

Cependant, ces appareils sont relativement complexes et assez coûteux. De plus, ils sont souvent encombrants et lourds, donc peu pratiques à manipuler, surtout en haut d'une fouille de petite section. Leur principal inconvénient est de devoir se fixer à la fois sur la canalisation principale et sur la canalisation secondaire. Enfin, un autre inconvénient de ce type d'appareil est qu'il est impossible de souder la canalisation secondaire sur la prise de branchement en haut de fouille car la canalisation principale, sur laquelle l'appareil est censé prendre appui, n'est pas disponible. Par conséquent, il est indispensable de descendre au fond du puits la prise de branchement montée sur la canalisation par l'intermédiaire du manchon, avec comme risque de voir ladite prise tourner autour de la canalisation, voire s'en détacher.

L'invention vise donc à remédier aux inconvénients précités et à permettre la mise en place d'une canalisation secondaire sur une canalisation principale depuis le haut d'un puits de la fouille de taille (section) réduite, à un coût faible, sans qu'un appareil spécialisé soit immobilisé pendant tout le temps de soudage et de refroidissement des pièces. L'invention a encore pour but de permettre la mise en place d'une prise de branchement à l'aide d'un matériel léger, de réalisation simple, peu encombrant et facile à utiliser. L'exploitant du réseau gaz se trouve donc à même d'utiliser plus systématiquement cette invention lors de ce type d'intervention.

Pour cela, l'invention consiste en un dispositif pour positionner et maintenir liées ensemble une canalisation secondaire et une prise de branchement avant le montage de ladite prise de branchement sur une canalisation principale enterrée de transport de fluide, caractérisé en ce que le dispositif prend appui exclusivement sur la canalisation secondaire et sur la prise de branchement, à l'écart de la canalisation principale.

Ainsi, le risque de désolidarisation entre la prise de branchement et la canalisation secondaire est inexistant On peut également utiliser le dispositif de la présente invention pour réaliser le soudage de la canalisation secondaire sur la prise de branchement en dehors du puits de fouille (ce qui était impossible avec les dispositifs de l'art antérieur) dès lors que ces deux pièces sont parfaitement positionnées et immobilisées l'une par rapport à l'autre par l'intermédiaire dudit dispositif.

De façon à assurer un bon maintien de la prise de branchement et de la canalisation secondaire, le dispositif prendra de préférence appui sur un fût vertical cylindrique de la prise de branchement et sur une portion de la canalisation secondaire après avoir introduit celle-ci à l'intérieur d'un manchon latéral de la prise de branchement

Selon une considération complémentaire, ledit dispositif comprendra de préférence deux bras espacés l'un par rapport à l'autre et parallèles entre eux, lesdits bras étant liés par une portion d'extrémité courbée adaptée pour être montée autour du fût de la prise de branchement et se terminant chacun, à leur extrémité libre, par une demi-coquille adaptée pour entourer la canalisation secondaire.

De façon à permettre au dispositif de s'adapter à différents diamètres de canalisation secondaire, chaque demi-coquille formera de préférence un Vé entourant la canalisation secondaire.

De façon à assurer un bon maintien du dispositif sur la canalisation secondaire, les deux demi-coquilles pourront être entourées d'un collier de serrage.

Toujours dans le même but et selon une alternative de réalisation, les deux demi-coquilles pourront être de section sensiblement semi circulaire et se chevaucher partiellement de façon à former un collier cranté auto-serrant

De façon à permettre le soudage de la canalisation secondaire sur le manchon de la prise de branchement, le dispositif présentera de préférence une ouverture entre ses bras pour un accès à des plots de connexion électrique disposés sur le manchon de la prise de branchement et destinés au soudage dudit manchon sur la canalisation secondaire.

Selon une autre considération, le dispositif sera de préférence réalisé en matière plastique rigide et pourra être déformable élastiquement au moins à son extrémité courbée. Ainsi, il sera possible d'écarter facilement les bras pour venir positionner le dispositif autour du fût de la prise de branchement avant de venir placer les demi-coquilles de chaque bras autour de la canalisation secondaire, cette opération étant facilitée par l'élasticité « en retour » de la portion courbée d'extrémité du dispositif.

L'invention concerne également un procédé de mise en place d'une canalisation secondaire sur une canalisation principale, par l'intermédiaire d'une prise de branchement munie d'un fût cylindrique vertical et d'un manchon latéral, ledit procédé comprenant les étapes suivantes :
- réaliser un puits de fouille de taille inférieure à celle permettant à un homme de descendre dedans, tout en dégageant au moins le pourtour supérieur du tronçon de la canalisation principale sur laquelle doit être installée la prise de branchement,
- introduire, en haut du puits de fouille, la canalisation secondaire à l'intérieur du manchon de la prise de branchement,
- maintenir la canalisation secondaire à l'intérieur dudit manchon par l'intermédiaire du dispositif de maintien décrit précédemment,
- descendre l'ensemble constitué par la prise de branchement, la canalisation secondaire et ledit dispositif de maintien au fond du puits de fouille,
- positionner la prise de branchement sur le tronçon de la canalisation principale,
- procéder aux opérations de soudage de la prise de branchement sur la canalisation principale,
- percer la canalisation principale à l'endroit du fût de la prise de branchement et obturer ce fût,
- reboucher le puits de fouille et laisser le dispositif enterré.

L'opération de soudage du manchon sur la canalisation secondaire pourra être réalisée soit avant de descendre l'ensemble au fond du puits de fouille (c'est-à-dire hors fouille), soit une fois l'ensemble descendu au fond de la fouille, par exemple en même temps que l'opération de soudage de ladite prise de branchement sur la canalisation principale.

Dans la première solution, l'opérateur qui manipule les outils en haut de fouille sera plus concentré sur la liaison en fond de fouille de la prise de branchement sur la canalisation principale car il sera délesté du problème supplémentaire de la soudure du manchon sur la canalisation secondaire. De plus, avec cette solution, on est sûr que la canalisation secondaire ne risque pas de tourner par rapport au manchon lors de la descente de l'ensemble au fond du puits.

L'invention et sa mise en oeuvre apparaîtront encore plus clairement à l'aide de la description qui va suivre, faite en référence aux dessins dans lesquels :
- la figure 1 est une vue en perspective du dispositif de l'invention en position montée,
- la figure 2 est une vue en coupe du dispositif seul,
- la figure 3 est une autre vue en coupe du dispositif seul,
- la figure 4 est une troisième vue en coupe du dispositif montrant une variante de réalisation de la figure 1,
- les figures 5 et 6 représentent une autre variante de réalisation de la figure 4,
- la figure 7 représente, en coupe, un puits de fouille au fond duquel se trouve une canalisation principale.

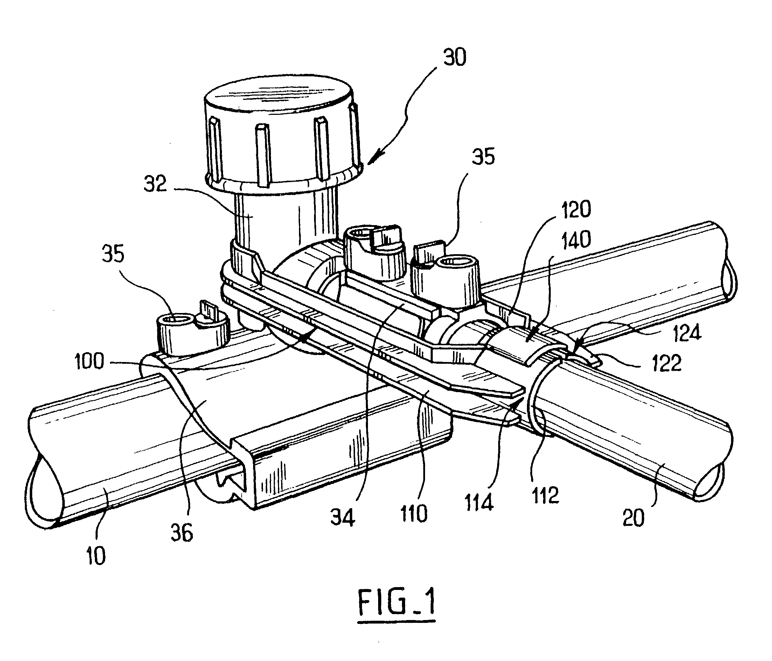

La figure 1 représente un dispositif 100 de maintien en position d'une canalisation secondaire 20 sur une prise de branchement 30 destinée à être montée sur une canalisation principale 10.

La canalisation secondaire 20 est typiquement de diamètre inférieur à celui de la canalisation principale 10, et peut par exemple constituer un branchement dirigé vers une habitation en vue de l'alimenter en gaz (ou en eau) circulant dans la canalisation principale (10) formant le réseau principal d'alimentation.

Le dispositif 100 est indépendant de la prise de branchement 30 et des deux canalisations 10 et 20. Il prend appui uniquement sur la canalisation secondaire 20 et sur une partie de la prise de branchement 30, à l'exclusion de la canalisation principale 10, ce qui fait son originalité. Il peut également être utilisé en haut de fouille, comme cela est décrit plus loin.

La prise de branchement 30, de préférence en matière plastique thermofusible (polyéthylène par exemple), comprend :
- un fût 32 creux, de préférence cylindrique et sensiblement vertical une fois la prise de branchement 30 montée sur la canalisation principale 10,
- une selle 36 épousant la forme de la canalisation principale 10 et équipée de plots 35 de connexion à une alimentation électrique en vue du soudage par fusion de matière plastique de ladite prise de branchement 30 sur la canalisation principale 10,
- et un manchon latéral 34 perpendiculaire audit fût 32 et à la canalisation principale 10 lorsque ces deux pièces sont montées l'une sur l'autre, le manchon 34 étant également équipé de plots 35 de connexion électrique utilisé pour son soudage à la canalisation secondaire 20.

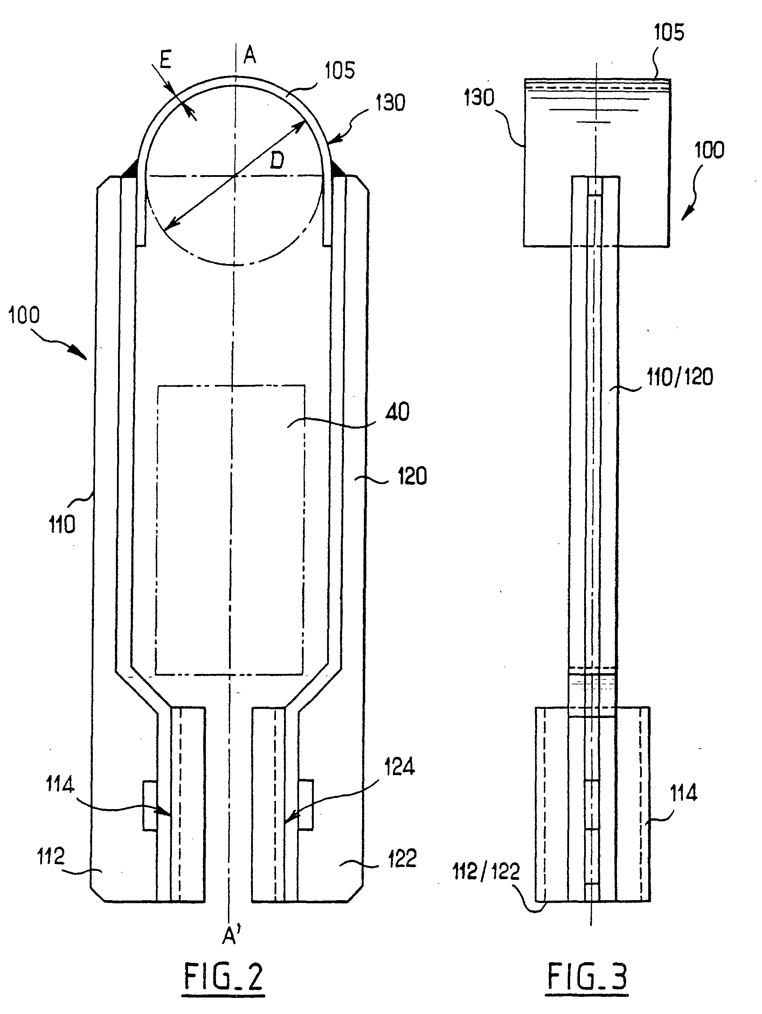

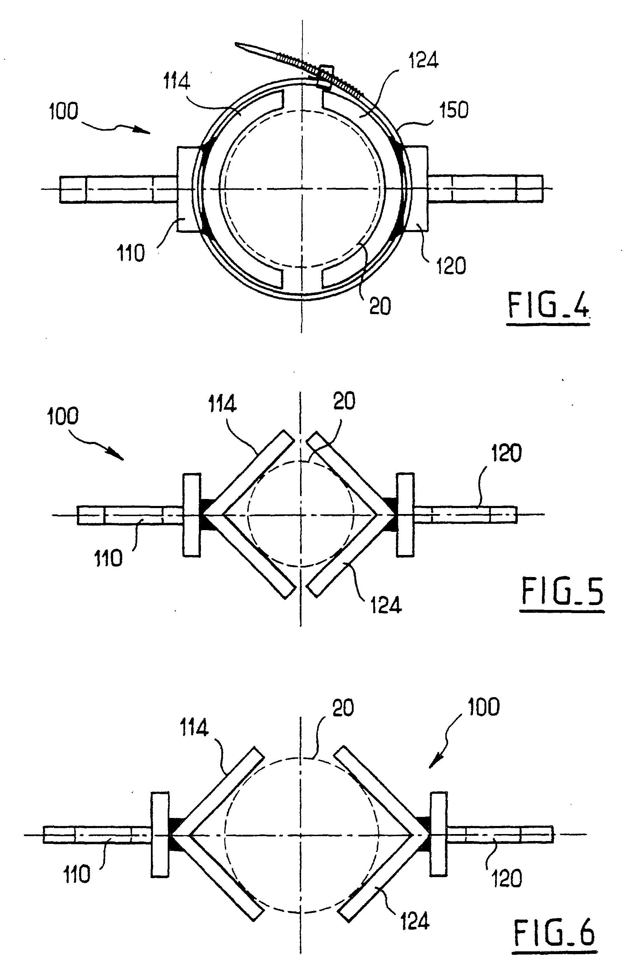

La figure 2 représente en coupe le dispositif 100 de maintien représenté sur la figure 1. Ce dispositif, de préférence réalisé par exemple par moulage en matière plastique (PVC, ABS, ...), comprend deux bras 110 et 120 espacés l'un par rapport à l'autre et sensiblement parallèles entre eux. Ces deux bras 110 et 120 s'étendent selon un axe AA' qui fait également office d'axe de symétrie et qui est sensiblement confondu avec l'axe longitudinal de la seconde canalisation 20 lorsque ces deux pièces sont liées (voir aussi figure 1). Les deux bras 110 et 120 ont une longueur qui varie selon le diamètre des canalisations utilisées. Typiquement, cette longueur est de quelques dizaines de centimètres (par exemple de 10 à 20 centimètres et de préférence environ 15 centimètres). Ils sont liés (ou se rejoignent), à une première extrémité 105, en une portion courbée 130 décrivant sensiblement un demi-cercle. Cette portion courbée 130 définit une sorte de charnière par déformation élastique qui permet aux bras 110/120 de s'ouvrir en s'écartant légèrement l'un de l'autre (comme cela est décrit plus loin) en raison de la flexibilité et de l'élasticité du matériau utilisé, et ce afin de pouvoir passer ledit dispositif 100 autour du fût 32 de la prise de branchement 30. A cet effet, le diamètre interne D de cette portion 130 semi circulaire est sensiblement égal au diamètre externe du fût 32 de la prise de branchement 30, et son épaisseur E est faible par rapport à son diamètre. A chaque extrémité libre 112 et 122, chacun des bras 110/120 se termine par une demi-coquille 114/124 de section semi circulaire d'axe central AA' destinée à venir entourer la canalisation secondaire 20 (voir figure 1). Les figures 4 à 6 représentent en coupe différentes variantes possibles de ces demi-coquilles 114/124. Ainsi, le dispositif 100 a une forme de pince à glaçon.

Pour sécuriser la liaison entre les deux demi-coquilles 114/124 et la canalisation secondaire 20, celles-ci peuvent se chevaucher partiellement (voir figure 1) et être crantées de façon à définir un collier 140 auto-serrant Cette solution est dite « toute intégrée » car le collier de serrage 140 cranté est moulé avec le reste du dispositif 100 de maintien.

La figure 4 montre une variante de réalisation dans laquelle les deux demi-coquilles 114/124 ne se chevauchent pas, un léger espace se trouvant même entre elles (par exemple pour s'adapter à des diamètres différents, mais relativement proches, de canalisation secondaire). Dans ce cas, il est alors préférable d'utiliser un collier de serrage supplémentaire 150 de type connu, comme par exemple un collier cranté serre-fils commun, un collier de type Serflex ® (ou à papillon à contrôle d'effort), ou encore un collier de type Snapper ® à double crantage. Ce collier 150 vient enserrer les demi-coquilles 114/124, d'une part pour éviter que les bras 110/120 s'ouvrent et s'écartent par inadvertance et d'autre part afin de pouvoir offrir un meilleur blocage axial (selon l'axe AA') de la canalisation secondaire 20 à l'intérieur du manchon 34.

Les figures 5 et 6 montrent une autre variante de réalisation dans laquelle les deux demi-coquilles 114/124 forment chacune un Vé à la place d'avoir une section semi circulaire. Cette solution, qui sera de préférence équipée d'un collier de serrage (non représenté) du type de celui utilisé dans la solution de la figure 4, permet au dispositif 100 de s'adapter à différents diamètres de canalisation secondaire 20, même très différents, et ce sans incidence néfaste sur le maintien de la canalisation secondaire 20 dans la prise de branchement 30.

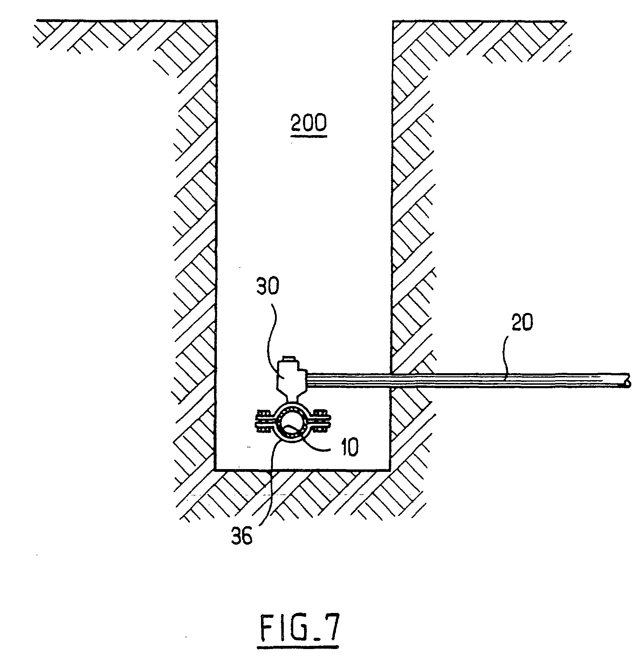

Nous allons maintenant décrire, à l'aide des figures 1 et 7, le mode de fonctionnement de ce dispositif 100 dans le cadre de la mise en place d'une conduite de dérivation 20 sur une conduite principale 10 via une prise de branchement 30.

Dans une première étape, on réalise un puits de fouille 200 (voir figure 7) de faible section (40 centimètres sur 40 centimètres) dans le sol, au-dessus de la canalisation principale 10, et à l'endroit où l'on veut faire la jonction avec la canalisation secondaire 20 (laquelle est en général reliée à une habitation pour l'alimenter en gaz ou en eau).

Une fois le puits de fouille 200 réalisé, on rend une partie de la canalisation principale 10 accessible, c'est-à-dire qu'on retire la terre qu'elle présente au-dessus d'elle et de préférence au-dessous sur environ 15 à 30 centimètres si la prise de branchement 30 possède aussi, comme cela est le cas, une selle inférieure.

On introduit, du haut de la fouille, la canalisation secondaire 20 à l'intérieur du manchon 34 de la prise de branchement 30.

On monte le dispositif de maintien 100 d'une part autour du fût 32 de la prise de branchement 30, en écartant légèrement les bras 110 et 120 de telle sorte que l'extrémité distale 105 courbée du dispositif 100 épouse la forme dudit fût 32, et d'autre part autour de la canalisation secondaire 20 à l'aide des deux demi-coquilles 110 et 120 et éventuellement d'un collier 140/150 de serrage. Un espace 40 est prévu entre les bras 110 et 120 lorsque ceux-ci sont en position de façon à pouvoir accéder aux plots 35 de branchement du manchon 34.

Une fois que la canalisation secondaire 20 et la prise de branchement 30 sont bien immobilisées l'une par rapport à l'autre, en particulier selon l'axe AA' (ou l'axe xx'), on descend cet ensemble au fond de la fouille.

On peut alors positionner la prise de branchement 30 autour de la canalisation principale 10. Pour cela, on peut utiliser des techniques connues telles que celles décrites dans EP-A-205 696 ou FR-A-2 714 710.

On soude alors par fusion de matière plastique la prise de branchement 30 sur la canalisation principale 10 comme cela est décrit par exemple dans EP-B-376 773, tout en la maintenant en position.

Si on ne l'a pas déjà fait en haut de la fouille, on soude également le manchon 34 sur la canalisation secondaire 20 à l'aide également des plots 35 de connexion prévus à cet effet et de la technique dont il est question ci-avant (EP-B-376 773).

On peut alors percer la canalisation principale au niveau du fût 32 de la prise de branchement 30 et reboucher ledit fût 32, comme cela est décrit dans FR-A-2 714 710.

Enfin, on retire les différents outils utilisés (soudage, perçage) et on rebouche le puits de fouille en laissant le dispositif 100 enterré.

Bien évidemment, l'invention n'est nullement limitée aux modes de réalisation illustrés à titre d'exemple uniquement

Ainsi, la mise en place du dispositif 100 de maintien peut également se faire en fond de fouille, auquel cas il sera prévu d'utiliser des outils spéciaux permettant de passer ledit dispositif 100 autour du fût 32 de la prise de branchement 30 et de la canalisation secondaire 20, ainsi que des outils pour venir serrer les deux demi-coquilles 110 et 120 (ou le collier 140/150) autour de la canalisation secondaire 20.

## Revendications

1. Dispositif (100) pour positionner et maintenir liées ensemble une canalisation secondaire (20) et une prise de branchement (30) avant le montage de ladite prise de branchement sur une canalisation principale (10) enterrée de transport de fluide, **caractérisé en ce que** le dispositif (100) prend appui exclusivement sur la canalisation secondaire (20) et sur la prise de branchement (30), à l'écart de la canalisation principale (10).

2. Dispositif (100) selon la revendication 1, **caractérisé en ce qu'**il prend appui sur un fût (32) vertical cylindrique de la prise de branchement (30) et sur une portion de la canalisation secondaire (20) après avoir introduit celle-ci à l'intérieur d'un manchon (34) latéral de la prise de branchement (30).

3. Dispositif (100) selon la revendication 2, **caractérisé en ce qu'**il comprend deux bras (110, 120) espacés l'un de l'autre et sensiblement parallèles entre eux, lesdits bras (110, 120) étant liés par une portion d'extrémité courbée (130) adaptée pour être montée autour du fût (32) de la prise de branchement (30) et se terminant chacun, à leur extrémité (112, 122) libre, par une demi-coquille (114, 124) adaptée pour entourer la canalisation secondaire (20).

4. Dispositif (100) selon la revendication 3, **caractérisé en ce que** chaque demi-coquille (114, 124) forme un Vé entourant la canalisation secondaire (20).

5. Dispositif (100) selon l'une quelconque des revendications 3 à 4, **caractérisé en ce que** les deux demi-coquilles (114, 124) sont entourées d'un collier de serrage (150).

6. Dispositif (100) selon la revendication 3, **caractérisé en ce que** les deux demi-coquilles (114, 124) sont de section sensiblement circulaire et se chevauchent partiellement pour former un collier (140) cranté auto-serrant

7. Dispositif (100) selon l'une quelconque des revendications 3 à 6, **caractérisé en ce qu'**il présente une ouverture (40) entre ses bras (110, 120) pour un accès à des plots (35) de connexion électrique disposés sur le manchon (34) de la prise de branchement (30) et destinés au soudage dudit manchon (34) sur la canalisation secondaire (20).

8. Dispositif (100) selon l'une quelconque des revendications 3 à 7, **caractérisé en ce qu'**il est réalisé en matière plastique rigide et qu'il est élastiquement déformable au moins à son extrémité courbée (105).

9. Procédé de mise en place d'une canalisation secondaire (20) sur une canalisation principale (10), par l'intermédiaire d'une prise de branchement (30) munie d'un fût (32) cylindrique vertical et d'un manchon (34) latéral, ledit procédé comprenant les étapes suivantes :
- réaliser un puits de fouille de taille inférieure à celle permettant à un homme de descendre dedans, tout en dégageant au moins le pourtour supérieur du tronçon de la canalisation principale (10) sur laquelle doit être installée la prise de branchement (30),
- introduire, en haut du puits de fouille, la canalisation secondaire (20) à l'intérieur du manchon (34) de la prise de branchement (30),
- maintenir la canalisation secondaire (20) à l'intérieur dudit manchon (34) par l'intermédiaire du dispositif (100) de maintien selon l'une quelconque des revendications 1 à 8,
- descendre l'ensemble constitué par la prise de branchement (30), la canalisation secondaire (20) et ledit dispositif (100) de maintien au fond du puits de fouille,
- positionner la prise de branchement (30) sur le tronçon de la canalisation principale (10),
- procéder aux opérations de soudage de la prise de branchement (30) sur la canalisation principale (10) et du manchon (34) sur la canalisation secondaire (20),
- percer la canalisation principale (10) à l'endroit du fût (32) de la prise de branchement (30) et obturer ce fût (32),
- reboucher le puits de fouille et laisser le dispositif (100) de maintien enterré.

10. Procédé de mise en place d'une canalisation secondaire (20) sur une canalisation principale (10), par l'intermédiaire d'une prise de branchement (30) munie d'un fût (32) cylindrique vertical et d'un manchon (34) latéral, ledit procédé comprenant les étapes suivantes :
- réaliser un puits de fouille de taille inférieure à celle permettant à un homme de descendre dedans, tout en dégageant au moins le pourtour supérieur du tronçon de la canalisation principale (10) sur laquelle doit être installée la prise de branchement (30),
- introduire, en haut du puits de fouille, la canalisation secondaire (20) à l'intérieur du manchon (34) de la prise de branchement (30),
- maintenir la canalisation secondaire (20) à l'intérieur dudit manchon (34) par l'intermédiaire du dispositif (100) selon l'une quelconque des revendications 1 à 8,
- procéder à l'opération de soudage du manchon (34) sur la canalisation secondaire (20) en haut du puits de fouille, avant de descendre l'ensemble constitué par la prise de branchement (30), la canalisation secondaire (20) et ledit dispositif (100) de maintien au fond du puits de fouille,
- descendre cet ensemble au fond du puits de fouille,
- positionner la prise de branchement (30) sur le tronçon de la canalisation principale (10),
- procéder aux opérations de soudage de la prise de branchement (30) sur la canalisation principale (10),
- percer la canalisation principale (10) à l'endroit du fût (32) de la prise de branchement (30) et obturer ce fût (32),
- reboucher le puits de fouille et laisser le dispositif (100) enterré.

## Patentansprüche

1. Vorrichtung (100) um eine Nebenleitung (20) und einen Zweiganschluss (30) vor der Montage des Zweiganschlusses an der unterirdischen, ein Fluid transportierenden Hauptleitung (10) zu positionieren und zusammenzuhalten, **dadurch gekennzeichnet, dass** die Vorrichtung (100) sich in einem Abstand zu der Hauptleitung (10) ausschließlich auf der Nebenleitung (20) und dem Zweiganschluss (30) abstützt.

2. Vorrichtung (100) nach Anspruch 1, **dadurch gekennzeichnet dass** sie sich auf einem zylindrischen vertikalen Schaft (32) des Zweiganschlusses (30) und auf einem Teil der Nebenleitung (20) abstützt, nachdem man diese in eine seitliche Muffe (34) des Zweiganschlusses eingeführt hat.

3. Vorrichtung (100) nach Anspruch 2, **dadurch gekennzeichnet, dass** sie zwei Arme (110, 120) besitzt, die zueinander beabstandet sind und im Wesentlichen parallel zueinander liegen, wobei die Arme (110, 120) durch einen gekrümmten Abschnitt (130) verbunden sind, der mit dem Schaft (32) des Zweiganschlusses (30) verbunden werden kann und wobei sie jeweils an ihrem freien Ende (112, 122) mit einer Halbschale (114, 124) enden, die dazu ausgelegt sind, die Nebenleitung zu umschließen.

4. Vorrichtung (100) nach Anspruch 3, **dadurch gekennzeichnet, dass** jede Halbschale (114, 124) ein V bildet, das die Nebenleitung (20) umfängt.

5. Vorrichtung (100) nach einem der Ansprüche 3 bis 4, **dadurch gekennzeichnet, dass** die beiden Halbschalen (114, 124) von einer Seilklammer (150) umschnürt sind.

6. Vorrichtung (100) nach Anspruch 3, **dadurch gekennzeichnet, dass** die beiden Halbschalen (114, 124) einen im Wesentlichen kreisförmigen Querschnitt haben und sich teilweise überschneiden, um einen sich selbst verschließenden Rastring (140) zu bilden.

7. Vorrichtung (100) nach einem der Ansprüche 3 bis 6, **dadurch gekennzeichnet, dass** sie zwischen ihren Armen (110, 120) eine Öffnung (40) für einen Zugang zu elektrischen Anschlussbuchsen (35) bietet, die auf der Muffe (34) des Zweiganschlusses (30) angeordnet und für die Verschweißung der Muffe (34) auf der Nebenleitung bestimmt sind.

8. Vorrichtung (100) nach einem der Ansprüche 3 bis 7, **dadurch gekennzeichnet, dass** sie aus einem starren Kunststoffmaterial besteht und dass sie wenigstens an ihrem gekrümmten Ende (105) elastisch deformierbar ist.

9. Verfahren zur Anbindung einer Nebenleitung (20) an eine Hauptleitung (10) über einen Zweiganschluss (30), der mit einem vertikalen, zylindrischen Schaft (32) versehen ist, sowie einer seitlichen Muffe, wobei das Verfahren aus den folgenden Schritten besteht:
- Schaffen einer Baugrube geringerer Größe als einem Mann zu gestatten hinabzusteigen, wobei wenigstens der obere Umfang des Stücks der Hauptleitung (10) freigelegt wird, an dem der Zweiganschluss (30) installiert werden soll,
- Einführen der Zweigleitung (20) über der Baugrube in das Innere der Muffe (34) des Zweiganschlusses (30),
- Halten der Zweigleitung (20) in der Muffe (34) mittels der Haltevorrichtung (100) gemäß einem der Ansprüche 1 bis 8,
- Herablassen des durch den Zweiganschluss (30), die Zweigleitung (20) und die besagte Haltevorrichtung (100) gebildeten Zusammenbaus auf den Boden der Baugrube,
- Positionieren des Zweiganschlusses (30) auf dem Stück der Hauptleitung (10),
- Übergehen zur Verschweißung des Zweiganschlusses (30) auf der Hauptleitung (10) und der Muffe (34) auf der Nebenleitung (20),
- Anstechen der Hauptleitung (10) an der Stelle des Schafts (32) des Zweiganschlusses (30) und Verschließen des Schafts (32),
- Verfüllen der Baugrube wobei die Haltevorrichtung (100) vergraben bleibt.

10. Verfahren zur Anbindung einer Nebenleitung (20) an eine Hauptleitung (10) über einen Zweiganschluss (30), der mit einem vertikalen, zylindrischen Schaft (32) versehen ist, sowie einer seitlichen Muffe, wobei das Verfahren aus den folgenden Schritten besteht:
- Schaffen einer Baugrube geringerer Größe als einem Mann zu gestatten hinabzusteigen, wobei wenigstens der obere Umfang des Stücks der Hauptleitung (10) freigelegt wird, an dem der Zweiganschluss (30) installiert werden soll,
- Einführen der Zweigleitung (20) über der Baugrube in das Innere der Muffe (34) des Zweiganschlusses (30),
- Halten der Zweigleitung (20) in der Muffe (34) mittels der Haltevorrichtung (100) gemäß einem der Ansprüche 1 bis 8,
- Voranschreiten zur Verschweißung der Muffe (34) auf der Nebenleitung (20) oberhalb der Baugrube vor dem Herablassen des Zusammenbaus, der durch den Zweiganschluss (30) der Nebenleitung (20) und der Haltevorrichtung (100) gebildet wird auf den Boden der Baugrube,
- Herablassen des Zusammenbaus auf den Boden der Baugrube,
- Anordnen des Zweiganschlusses (30) auf dem Abschnitt der Hauptleitung (10),
- Voranschreiten zur Verschweißung des Zweiganschlusses auf der Hauptleitung (10),
- Anstechen der Hauptleitung (10) an der Stelle des Schafts (32) des Zweiganschlusses (30) und Verschließen des Schafts,
- Auffüllen der Baugrube, wobei die Vorrichtung (100) vergraben bleibt.

## Claims

1. Device (100) for positioning and holding together a secondary pipe (20) and a branch connector (30) before the said branch connector is mounted on a buried main pipe (10) for transporting fluid, **characterised in that** the device (100) rests solely on the secondary pipe (20) and on the branch connector (30), away from the main pipe (10).

2. Device (100) according to claim 1, **characterised in that** it rests on a vertical cylindrical shaft (32) of the branch connector (30) and on a portion of the secondary pipe (20) after the latter has been introduced into a lateral sleeve (34) of the branch connector (30).

3. Device (100) according to claim 2, **characterised in that** it has two arms (110, 120) which are at a distance from and substantially parallel to each other, the said arms (110, 120) being joined by a curved end portion (130), which is able to be fitted around the shaft (32) of the branch connector (30), and each terminating, at their free end (112, 122), in a half-shell (114, 124) which is able to surround the secondary pipe (20).

4. Device (100) according to claim 3, **characterised in that** each half-shell (114, 124) forms a V surrounding the secondary pipe (20).

5. Device (100) according to either claim 3 or claim 4, **characterised in that** the two half-shells (114, 124) are surrounded by a gripping collar (150).

6. Device (100) according to claim 3, **characterised in that** the two half-shells (114, 124) are substantially circular in cross-section and overlap partially in order to form a serrated self-tightening collar (140).

7. Device (100) according to any one of claims 3 to 6, **characterised in that** it has an opening (40) between its arms (110, 120) allowing access to power supply contacts (35) which are arranged on the sleeve (34) of the branch connector (30) and are intended for the welding of the said sleeve (34) to the secondary pipe (20).

8. Device (100) according to any one of claims 3 to 7, **characterised in that** it is produced from rigid plastics material and is elastically deformable at least at its curved end (105).

9. Process for fitting a secondary pipe (20) to a main pipe (10) by way of a branch connector (30) equipped with a vertical cylindrical shaft (32) and a lateral sleeve (34), the said process comprising the following steps:
- producing an excavation pit of a size that is smaller than that allowing a man to descend into it, and freeing at least the upper circumference of the section of the main pipe (10) on which the branch connector (30) must be fitted,
- introducing, from the top part of the excavation pit, the secondary pipe (20) into the sleeve (34) of the branch connector (30),
- holding the secondary pipe (20) inside the said sleeve (34) by means of the holding device (100) according to any one of claims 1 to 8,
- lowering the assembly formed by the branch connector (30), the secondary pipe (20) and the said holding device (100) to the bottom of the excavation pit,
- positioning the branch connector (30) on the section of the main pipe (10),
- carrying out the operations of welding the branch connector (30) to the main pipe (10) and the sleeve (34) to the secondary pipe (20),
- drilling a hole in the main pipe (10) at the location of the shaft (32) of the branch connector (30) and closing off the shaft (32),
- filling in the excavation pit again and leaving the holding device (100) buried.

10. Process for fitting a secondary pipe (20) to a main pipe (10) by way of a branch connector (30) equipped with a vertical cylindrical shaft (32) and a lateral sleeve (34), the said process comprising the following steps:
- producing an excavation pit of a size that is smaller than that allowing a man to descend into it, and freeing at least the upper circumference of the section of the main pipe (10) on which the branch connector (30) must be fitted,
- introducing, from the top part of the excavation pit, the secondary pipe (20) into the sleeve (34) of the branch connector (30),
- holding the secondary pipe (20) inside the said sleeve (34) by means of the device (100) according to any one of claims 1 to 8,
- carrying out the operation of welding the sleeve (34) to the secondary pipe (20) from the top part of the excavation pit before the assembly formed by the branch connector (30), the secondary pipe (20) and the said holding device (100) is lowered to the bottom of the excavation pit,
- lowering the assembly to the bottom of the excavation pit,
- positioning the branch connector (30) on the section of the main pipe (10),
- carrying out the operations of welding the branch connector (30) to the main pipe (10),
- drilling a hold in the main pipe (10) at the location of the shaft (32) of the branch connector (30) and closing off the shaft (32),
- filling in the excavation pit again and leaving the device (100) buried.
